# EUROPEAN PATENT APPLICATION

(11) **EP 3 396 194 A1**
(43) Date of publication of application: **31.10.2018**
(21) Application number: 16878760.4
(22) Date of filing: 21.12.2016
(51) Int. Cl.: F16D 65/092, B61H 5/00, F16D 65/097

(54) **BRAKE LINING FOR RAILWAY ROLLING STOCK, AND DISC BRAKE PROVIDED THEREWITH**

(30) Priority: 25.12.2015 JP 2015255435
(71) Applicant: Nippon Steel & Sumitomo Metal Corporation, Tokyo 100-8071 (JP); Fine Sinter Co., Ltd., Kasugai-shi, Aichi 480-0303 (JP)
(72) Inventor: FUJIMOTO, Takahiro, Tokyo 100-8071 (JP); SAKAYAMA, Yuiko, Tokyo 100-8071 (JP); SAKAGUCHI, Atsushi, Tokyo 100-8071 (JP); ASABE, Kazutaka, Tokyo 100-8071 (JP); NAKANO, Takeshi, Kasugai-shi Aichi 480-0303 (JP); IKEDA, Makoto, Kasugai-shi Aichi 480-0303 (JP); SHIMAZOE, Isao, Kasugai-shi Aichi 480-0303 (JP); KARINO, Yasushi, Kokubunji-shi Tokyo 185-8540 (JP); TAKAMI, Hajime, Kokubunji-shi Tokyo 185-8540 (JP)
(74) Representative: Zimmermann & Partner Patentanwälte mbB
(86) International application number: PCT/JP2016/088092
(87) International publication number: WO 2017/110873

(57) **Abstract**

A brake lining (2) is provided that is to be pressed against a sliding surface of a brake disk fastened to a wheel or an axle of a railway vehicle. The brake lining (2) includes: a plurality of friction members (3) arranged to be spaced from each other, each of the friction members having a front surface that is to face the sliding surface of the brake disk; a back board (4) fastened to a back surface of each of the friction members (3); and a base plate (6) supporting each friction member (3) at a region including a center portion of the respective friction members (3), wherein a spring member is disposed between the base plate (6) and the back boards (4) on a back surface side of the respective friction members (3). Two friction members (3) that are adjacent to each other are taken as a pair, and the back board (4) that is fastened to the pair of friction members (3) is a one-piece member, and a width of the back board (4) at a space between the friction members (3) of the pair of friction members (3) is greater than a width of the friction member (3). Brake squeal can be decreased by this brake lining. The brake lining is easily applied to existing vehicles, and manufacture management of the brake lining is simple.

## Description

### TECHNICAL FIELD

The present invention relates to a disk brake for use as a braking device for a railway vehicle. In particular, the present invention relates to a brake lining for a railway vehicle configured to be pressed against a sliding surface of a brake disk fastened to a wheel or an axle, and to a disk brake for a railway vehicle that is equipped with the brake lining.

### BACKGROUND ART

In recent years, the use of disk brakes as braking devices for land transportation vehicles such as railway vehicles, automobiles and motorcycles is increasing as such vehicles become faster and larger. A disk brake is a device that produces a braking force by means of friction generated by sliding contact between a brake disk and a brake lining.

As a disk brake for a railway vehicle, a donut-shaped brake disk is mounted and fastened to a wheel or an axle, and a brake caliper presses a brake lining against a sliding surface of the brake disk, and thereby, a braking force is produced. In this manner, the rotation of the wheel or the axle is controlled, so that the running vehicle slows down.

In the case of a disk brake, a brake disk vibrates and a noise that is called "brake squeal" occurs during operation of the disk brake. It is considered that brake squeal occurs because the whole brake unit generates an unstable vibration called a "self-excited vibration". Such a vibration arises due to friction when the brake lining is pressed against the brake disk for braking. The self-excited vibration is a vibration with an increasing amplitude that is generated as a result of external steady energy turning into vibration energy inside the system, and the vibration energy vibrating the system itself. In order to suppress brake squeal, it is necessary to suppress the self-excited vibration caused by the friction during the braking motion.

Patent Literature 1 discloses a disk brake wherein a pad is pressed against a brake disk via a piston. In the disk brake, the pad is moved toward a trailing side (contact ending side) that is the downstream side in the rotational direction of the brake disk by a friction when the pad is pressed against the brake disk. Accordingly, the contact area of the piston with the pad is greater on the trailing side than on the leading side that is the upstream side with respect to the rotational direction of the brake disk. Patent Literature 1 states that by this means, self-excited vibration is suppressed and thus brake squeal can be suppressed.

FIG. 1 is a plan view of a brake lining disclosed in Patent Literature 2. A brake lining 11 includes a base plate 13, and a plurality of friction members 12 that are disposed in a segmented manner in the circumferential direction and radial direction of a brake disk. Each friction member 12 is fastened to the base plate 13 via an elastic member (not shown). The support stiffness of the elastic member is configured to vary depending on the position of the friction member 12 on the base plate 13. Patent Literature 2 states that this structure can suppress brake squeal.

In Patent Literature 3, a brake lining is disclosed that has a similar structure to the brake lining disclosed in Patent Literature 2, and in which two friction members that are adjacent are connected by a plate-like member.

### CITATION LIST

### PATENT LITERATURE

Patent Literature 1: Japanese Patent Application Publication No. 2002-340056
Patent Literature 2: Japanese Patent Application Publication No. 2011-214629
Patent Literature 3: Japanese Patent Application Publication No. 2012-251597

### SUMMARY OF INVENTION

### TECHNICAL PROBLEM

However, when the technique disclosed in Patent Literature 1 is to be applied to an existing vehicle, it is necessary to change not only the brake lining but also the brake caliper configured to apply a pressing force on the brake lining, and this affects the design of the whole disk brake. Therefore, it is extremely difficult to apply the technique to an existing vehicle.

In the structure of the brake lining disclosed in Patent Literature 2, the support stiffness of each of the elastic members needs to be adjusted in accordance with the position thereof on the back board, and therefore the manufacture management is complicated.

In the brake lining disclosed in Patent Literature 3, the purpose of connecting the two friction members together by the plate-like member is to suppress rotation of the respective friction members and suppressing variations in frictional coefficient between the individual friction members. Patent Literature 3 does not discuss suppression of brake squeal.

In view of the situation described above, an objective of the present invention is to provide a brake lining that can suppress brake squeal and which can be easily applied to an existing vehicle and for which manufacture management is simple, and to also provide a disk brake that includes such a brake lining.

### SOLUTION TO PROBLEM

A brake lining according to the present embodiment is a brake lining configured to be pressed against a sliding surface of a brake disk fastened to a wheel or an axle of a railway vehicle, the brake lining including:
a plurality of friction members arranged to be spaced from each other, each of the friction members having a front surface that is to face the sliding surface of the brake disk;
a back board fastened to a back surface of each of the friction members; and
a base plate supporting each of the friction members at a region including a center portion of each of the friction members, wherein a spring member is disposed between the base plate and the back boards on a back surface side of each of the friction members;
wherein:
   two of the friction members that are adjacent to each other are taken as a pair, and the back board that is fastened to the pair of friction members is a one-piece member; and
   a width of the back board at a space between the friction members of the pair of friction members is greater than a width of the friction member.

A disk brake according to the present embodiment is a disk brake including:
a brake disk fastened to a wheel or an axle of a railway vehicle; and
the aforementioned brake lining to be pressed against a sliding surface of the brake disk.

### ADVANTAGEOUS EFFECTS OF INVENTION

The brake lining and disk brake of the present invention can suppress brake squeal. It is easy to apply the brake lining and disk brake of the present invention to an existing vehicle, and the manufacture management of the brake lining and disk brake is simple.

### BRIEF DESCRIPTION OF DRAWINGS

[FIG. 1] FIG. 1 is a plan view of a conventional brake lining.
[FIG. 2A] FIG. 2A is a plan view of a brake lining according to one embodiment of the present invention.
[FIG. 2B] FIG. 2B is a plan view of a pair of friction members and a back board provided in a brake lining according to one embodiment of the present invention.
[FIG. 2C] FIG. 2C is a sectional view of the brake lining shown in FIG. 2A along the line B-B.
[FIG. 2D] FIG. 2D is a plan view of a pair of friction members and a back board provided in a brake lining according to another embodiment of the present invention.
[FIG. 2E] FIG. 2E is a plan view of a pair of friction members and a back board provided in a brake lining according to a further embodiment of the present invention.
[FIG. 3A] FIG. 3A is a plan view of a pair of friction members and a back board provided in a brake lining according to an example of the present invention (W/D = 1.32).
[FIG. 3B] FIG. 3B is a plan view of a pair of friction members and a back board provided in a brake lining of a comparative example (W/D = 0.40).
[FIG. 3C] FIG. 3C is a plan view of a pair of friction members and a back board provided in a brake lining of a comparative example (W/D = 0.55).
[FIG. 3D] FIG. 3D is a plan view of a pair of friction members and a back board provided in a brake lining of a comparative example (W/D = 0.67).
[FIG. 3E] FIG. 3E is a plan view of a pair of friction members and a back board provided in a brake lining of a comparative example (W/D = 1).
[FIG. 4A] FIG. 4A is a diagram showing the relation between W/D and squeal index values.
[FIG. 4B] FIG. 4B is a diagram showing the relation between bending stiffness and squeal index values.
[FIG. 5A] FIG. 5A is a perspective view illustrating the distribution of amplitudes during braking motion with respect to a brake lining of an inventive example of the present invention.
[FIG. 5B] FIG. 5B is a perspective view illustrating the distribution of amplitudes during braking motion with respect to a brake lining of a comparative example for which W/D = 0.55.

### DESCRIPTION OF EMBODIMENTS

Hereunder, an embodiment of a brake lining and a disk brake for a railway vehicle of the present invention will be described in detail.

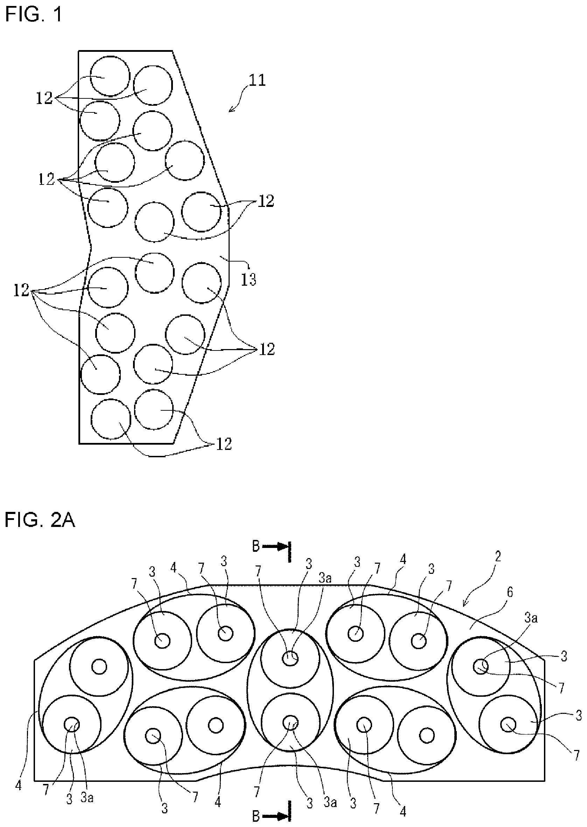

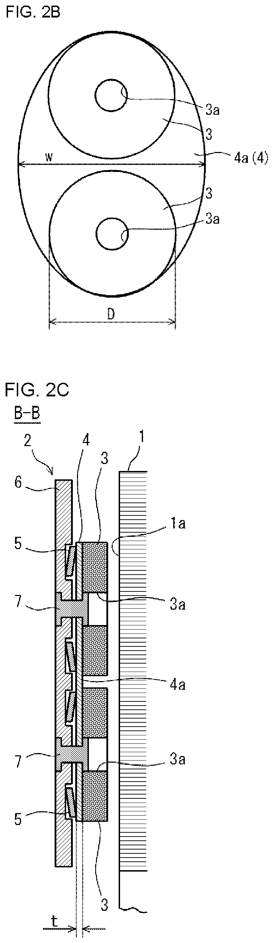

FIG. 2A to FIG. 2C are views that illustrate an example of a disk brake for a railway vehicle of the present invention. FIG. 2A is a plan view of a brake lining, FIG. 2B is a plan view of a pair of friction members, and FIG. 2C is a sectional view of the brake lining shown in FIG. 2A along the line B-B. FIG. 2A and FIG. 2B show a state in which the brake lining and the pair of friction members are seen from the front surface (which is to face the brake disk) side, respectively.

As shown in FIG. 2C, the disk brake of the present invention includes a brake disk 1 and a brake lining 2. The brake lining 2 is attached to a brake caliper (not shown). The brake disk 1 is a donut-shaped disk, is attached to a wheel or an axle (not shown) and is securely fastened thereto by a bolt or the like. For braking, the brake caliper is activated to press the brake lining 2 against a sliding surface 1a of the brake disk 1. This generates sliding friction between the brake disk 1 and the brake lining 2, and thereby generates a braking force. In this way, the disk brake controls the rotation of the wheel or axle and slows the running vehicle.

The brake lining 2 shown in FIG. 2A to FIG. 2C includes a plurality of friction members 3, back boards 4, spring members 5, and a base plate 6 supporting all of these components. The friction members 3 are arranged to be spaced from each other, and the front surface of each friction member faces the sliding surface 1a of the brake disc 1. The specific arrangement and number of the friction members 3 is not particularly limited.

The friction members 3 are made of a copper sintered material or a resin material or the like. As shown in FIG. 2A and FIG. 2B, the friction members 3 are a circular planar shape. A small hole 3a is formed in the center portion of each friction member 3. Rivets 7 are inserted in the small holes 3a. The rivets 7 fix the friction members 3 to the base plate 6. The planar shape of the friction members 3 is not limited to a circular shape, and for example may be a polygonal shape such as a quadrangular shape or a hexagonal shape.

The back boards 4 which are made of a thin plate of a metal such as steel are fastened to the back surface of each friction member 3 in order to maintain the strength and stiffness of the friction members 3. Two of the friction members 3 that are adjacent to each other are taken as a pair, and one back board 4 is provided for each pair of the friction members 3. The back board 4 is a one-piece member extending over both of the friction members 3. The pair of friction members 3 are in a state in which they are connected together by the back board 4. Therefore, the pair of friction members 3 are in a state in which they are connected together by the back board 4.

In this embodiment the back board 4 is an elliptical shape. In each pair of friction members 3, at a portion on an opposite side to a portion facing the other friction member 3, the back board 4 has substantially the same radius of curvature as the respective friction members 3, and an edge of the friction member 3 and an edge of the back board 4 substantially overlap. The arrangement direction of the pair of friction members 3 that are connected by the back board 4 is not particularly limited, and the pair of friction members 3 may be arranged in the radial direction of the brake disk 1, may be arranged in the circumferential direction, or may be arranged in a direction other than the radial direction and circumferential direction.

Each friction member 3 is fastened to the base plate 6, as well as the back board 4, by the rivet 7 that is inserted through the small hole 3a in the center portion of the individual friction members 3. That is, each friction member 3 is supported by the base plate 6 by means of the rivet 7 at a region that includes the center portion of the respective friction members 3. On a back surface side of each friction member 3, the spring member 5 is disposed between the back board 4 and the base plate 6. By this means, the plurality of friction members 3 are in a state in which each friction member 3 is elastically supported individually. Note that although disk springs are shown as an example of the spring members 5 in FIG. 2C, plate springs or coil springs may also be used as the elastic members 5.

According to the disk brake including the brake lining 2 having the configuration described above, each friction member 3 is individually movable. By this means, the contact surface pressure between the brake lining 2 and the brake disk 1 during braking motion can be uniformized.

Further, because each pair of friction members 3 is in a state in which the pair of friction members 3 are connected together by a one-piece back board 4, the movements thereof are constrained in comparison to a case where the friction members 3 are not connected together by a back board. Therefore, the frictional coefficient between the brake disk 1 and the brake lining 2 can be stabilized regardless of the running speed of the vehicle at the start of braking motion.

Furthermore, since each pair of friction members 3 is fastened to the base plate 6 by two rivets 7 as fastening members, a pair of friction members 3 does not rotate on the spot during braking motion, and thus looseness can be prevented from arising at portions at which the friction members 3 are fastened to the base plate 6. Even if the looseness arises at the fastening portions, the friction members 3 will not immediately fall off unless the fastening portions at the two locations are damaged at the same time. Therefore, sufficient durability and sufficient reliability of the disk brake can be ensured.

Since each of the friction members 3 is elastically supported with the position of the rivet 7 that is directly below the center portion thereof acting as a support point, the friction members 3 do not incline significantly even if the friction members 3 contact with the brake disk 1 and move during braking motion, and the entire contact surface of each friction member 3 becomes worn uniformly over the whole area thereof, and partial wearing of the friction members 3 does not occur.

In the brake lining 2 of the present invention, as shown in FIG. 2A and FIG. 2B, a width (hereunder, referred to as "connection portion width") W of a portion 4a (that is, a connection portion that connects the friction members 3) of the back board 4 which is a portion corresponding to the space between the paired friction members 3 that are fastened to the back board 4 is larger than a width D of the friction member 3. That is, 1 < W/D. In this embodiment, the width D of the friction member 3 is equal to the diameter of the friction member 3. The term "width" refers to the length in the direction that is perpendicular to the arrangement direction of the paired friction members 3.

By adopting a configuration so that 1 < W/D, the bending stiffness of the back board 4 is increased, and it becomes difficult for the respective friction members 3 of the pair of friction members 3 to move independently. As a result, self-excited vibration of the brake lining is suppressed, and brake squeal decreases. To sufficiently exert this effect, preferably 1.1 ≤ W/D, and more preferably 1.2 ≤ W/D. Further, because the individual friction members 3 are supported at a region that includes the center portion of the friction member, self-excited vibration of the brake lining is suppressed and brake squeal decreases in comparison to, for example, a case where a pair of friction members is supported using a back board at only the middle portion of the pair of friction members.

In a case of applying this brake lining configuration to an existing vehicle, for example, it suffices to only change the back boards (back metals), and it is not necessary to change a brake caliper and the like. Further, in this brake lining there is no necessity to change the support stiffness of the spring members 5 depending on the positions thereof on the base plate 6. Accordingly, it is easy to apply the brake lining 2 to an existing vehicle, and the manufacture management of the brake lining 2 is simple.

If the connection portion width W of the back board 4 is too large in comparison to the width D of the friction member 3, the necessity will arise to increase the size of the base plate 6 in order to prevent interference between the back boards 4 to which the respective pairs of adjoining friction members 3 are attached. Therefore, the ratio of the connection portion width W of the back board 4 to the width D of the friction member 3 is preferably not more than 2 (1 < W/D ≤ 2), and more preferably is not more than 1.5 (1 <W/D ≤ 1.5).

Preferably the edge of the back board is smoothly continuous. Here the term "smoothly continuous" means that a tangential direction does not abruptly change. For example, if there is a portion which is not smoothly continuous, such as a notch, in the edge of the back board, the stiffness will decrease and stress will concentrate at the portion such as a notch, and for this reason it is not preferable for the edge to have a portion which is not smoothly continuous. The shape of the back board edge may be composed of only a curve, or may partially include a straight line shape.

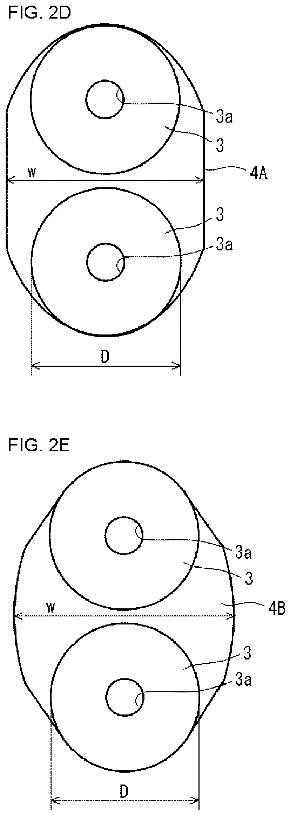

FIG. 2D and FIG. 2E are plan views of a pair of friction members and a back board provided in a brake lining according to another embodiment of the present invention and in a brake lining according to a further embodiment of the present invention, respectively. The embodiments shown in FIG. 2D and FIG. 2E include a back board 4A and a back board 4B, respectively, instead of the back board 4 shown in FIG. 2B.

Similarly to the back board 4 shown in FIG. 2B, the back boards 4A and 4B each have an approximately elliptical shape. However, in the back board 4A shown in FIG. 2D, the portions in the vicinity of the end parts in the width direction extend in a straight line shape. By this means, the amount by which the back board 4A projects laterally is reduced compared to the back board 4 shown in FIG. 2B, and it is thus easy to avoid interference between adjacent back boards 4A. Further, in the back board 4B shown in FIG. 2E, among the side portions, portions between the vicinity of the middle portion in the length direction and the vicinity of the ends in the length direction extend in a straight line shape. In this embodiment also, at portions at which the contour is a straight line shape, the amount by which the back board 4B projects is reduced in comparison to the back board 4 shown in FIG. 2B, and it is easy to avoid interference between adjacent back boards 4A.

### EXAMPLES

Squeal index values of brake linings were determined by a FEM (finite element method) analysis in a case where the width D of the friction member was made constant and the connection portion width W of the back board was changed. The term " squeal index value" refers to a value determined by, among damping values calculated by FEM complex eigenvalue analysis, summing up the damping values with negative values, that is, unstable oscillations, in each frequency range with a 1/3 octave band, obtaining the absolute value of the sum for the frequency range, and extracting the maximum value from the values for each frequency range. A smaller value of the squeal index means a smaller brake squeal sound.

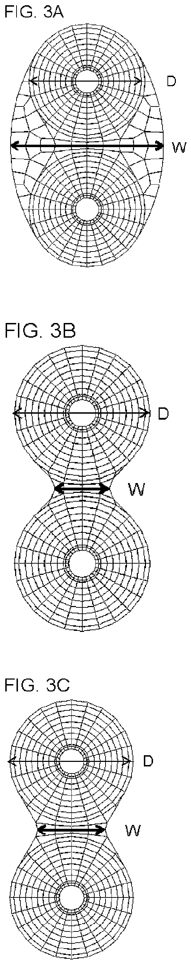

FIG. 3A to FIG. 3E are plan views of pairs of friction members and a back board provided in the respective brake linings that were the objects of the analysis. In each of FIG. 3A to FIG. 3E, the width D of the friction member is indicated by a thin line with two arrows, and the connection portion width W of the back board is indicated by a thick line with two arrows.

FIG. 3A shows a pair of friction members and a back board provided in a brake lining that is an inventive example of the present invention. In this brake lining 1<W/D (W/D = 1.32), and the back board projects laterally at a connection portion that connects the two friction members. Besides the back board having the shape shown in FIG. 3A, brake linings that included back boards having an elliptical shape in which W/D was 1.1, 1.2, and 1.5 were prepared as inventive examples of the present invention.

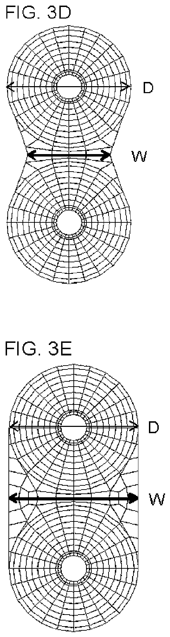

FIG. 3B to FIG. 3E each show a pair of friction members and a back board provided in brake linings that are comparative examples. In the brake linings in FIG. 3B to FIG. 3D, W/D<1, and the back board narrows at the connection portion that connects the two friction members. In the brake lining in FIG. 3E, W/D=1, and the edge of the back board has a straight line shape at the connection portion that connects the two friction members.

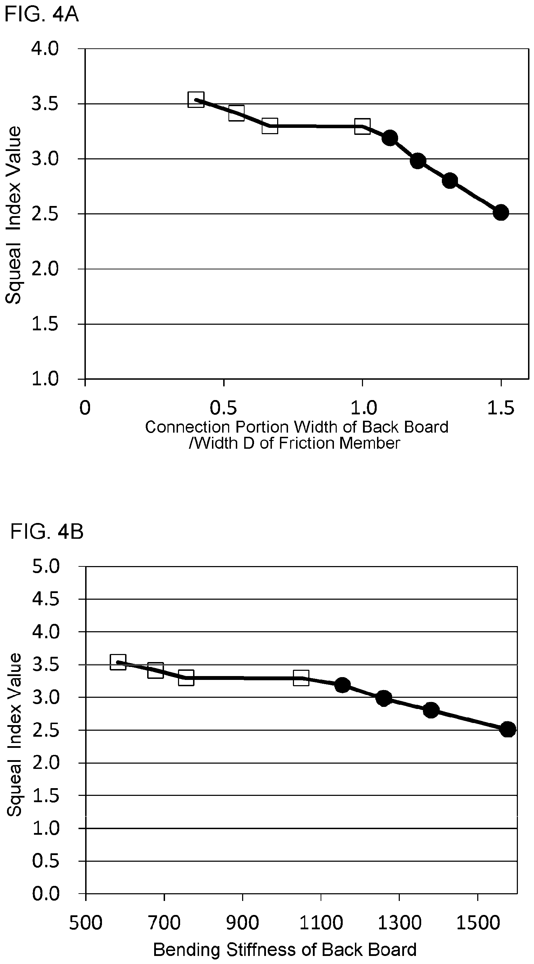

FIG. 4A shows the relation between W/D and the squeal index value. FIG. 4B shows the relation between the bending stiffness of the back board and the squeal index value. In FIG. 4A and FIG. 4B the solid circles represent data for the inventive examples of the present invention, and the open squares represent data for the comparative examples.

Based on FIG. 4A it is found that, in general, the squeal index value decreases as the W/D value increases. The squeal index value for the brake lining for which W/D = 1 (see FIG. 3E) is equal to the squeal index value for the brake lining for which W/D = 0.67 (see FIG. 3D). To obtain a squeal index value that is decreased further, it is necessary to make the W/D value greater than 1 (see FIG. 3A). In other words, in order to decrease the squeal index value in comparison to a case where the back board is narrow at the space between the two friction members of a pair of friction members, it is insufficient to only eliminate the narrow portion of the back board and form the side portion of the back board in a straight line shape, and it is necessary for the back board to project laterally.

Based on FIG. 4B it is found that, in general, the squeal index value decreases as the bending stiffness increases. The relation between the bending stiffness and the squeal index value exhibits the same tendency as the relation between W/D and the squeal index value. Therefore, it is considered that the reason the squeal index value is decreased when W/D is increased is that the bending stiffness increases as a result of increasing W/D.

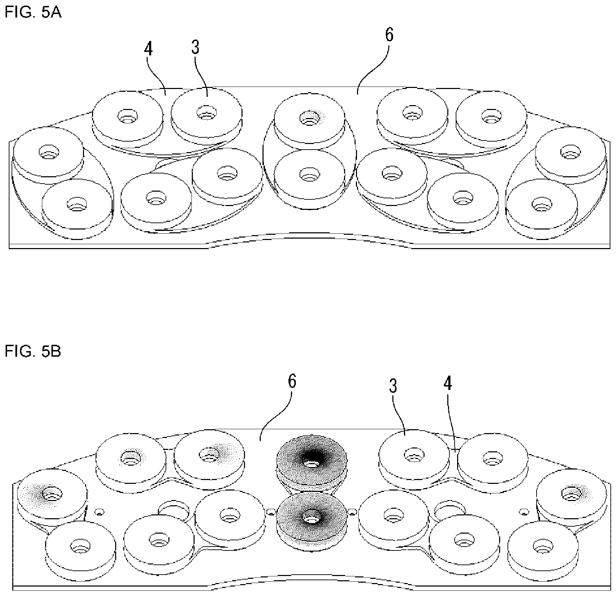

FIG. 5A and FIG. 5B illustrate the distribution of amplitudes that arise in the brake lining during braking motion. FIG. 5A relates to the inventive example in which W/D = 1.32 among the inventive examples of the present invention. FIG. 5B relates to the comparative example in which W/D = 0.55 (see FIG. 3C). In each of FIG. 5A and FIG. 5B, the closer to black (the darker the color) a portion is, the greater the amplitude at that portion. In the brake lining of the inventive example, regions in which the amplitude is large are markedly reduced in comparison to the comparative example in which W/D = 0.55.

The equal pressure performance (uniformity of pressure within butting faces of friction members with respect to a brake disk) was determined by FEM analysis for the respective brake linings illustrated in FIG. 3A to FIG. 3E. As a result it was revealed that the equal pressure performance hardly changed depending on differences in the value of W/D.

### INDUSTRIAL APPLICABILITY

The brake lining and disk brake for a railway vehicle of the present invention can be effectively utilized in various railway vehicles, and in particular is effectively utilized in high-speed railway vehicles which can run at various speeds in a wide range from low speed to high speed.

### REFERENCE SIGNS LIST

1: brake disk
1a: sliding surface
2: brake lining
3: friction member
4, 4A, 4B: back board
4a: connection portion
5: spring member
6: base plate
7: rivet

## Claims

1. A brake lining configured to be pressed against a sliding surface of a brake disk fastened to a wheel or an axle of a railway vehicle, the brake lining comprising:
a plurality of friction members arranged to be spaced from each other, each of the friction members having a front surface that is to face the sliding surface of the brake disk;
a back board fastened to a back surface of each of the friction members; and
a base plate supporting each of the friction members at a region including a center portion of each of the friction members, wherein a spring member is disposed between the base plate and the back boards on a back surface side of each of the friction members;
wherein:
two of the friction members that are adjacent to each other are taken as a pair, and the back board that is fastened to the pair of friction members is a one-piece member; and
a width of the back board at a space between the friction members of the pair of friction members is greater than a width of the friction member.

2. The brake lining according to claim 1, wherein:
a ratio of the width of the back board with respect to the width of the friction member is not more than 2.

3. The brake lining according to claim 1 or 2, wherein:
a ratio of the width of the back board with respect to the width of the friction member is not less than 1.1.

4. A disk brake, comprising:
a brake disk fastened to a wheel or an axle of a railway vehicle; and
the brake lining according to any one of claims 1 to 3 to be pressed against a sliding surface of the brake disk.
